# EUROPÄISCHE PATENTSCHRIFT

(11) **EP 2 092 400 B1**
(45) Veröffentlichungstag und Bekanntmachung des Hinweises auf die Patenterteilung: **04.01.2012**
(21) Anmeldenummer: 07819576.5
(22) Anmeldetag: 05.11.2007
(51) Int. Cl.: G05B 19/418, G05B 21/02

(54) **OPTIMIERTES SPEICHERUNGS- UND ZUGRIFFSVERFAHREN FÜR EINEN HISTORIENSERVER EINES AUTOMATISIERUNGSSYSTEMS**
OPTIMIZED STORAGE AND ACCESS METHOD FOR A HISTORIAN SERVER OF AN AUTOMATED SYSTEM
PROCÉDÉ DE MÉMORISATION ET D'ACCÈS OPTIMISÉ POUR SERVEUR D'ARCHIVES DE SYSTÈME D'AUTOMATISATION

(30) Priorität: 13.11.2006 DE 102006053699; 13.11.2006 DE 102006053700; 29.08.2007 DE 102007040676
(43) Veröffentlichungstag der Anmeldung: 26.08.2009
(73) Patentinhaber: ABB Technology AG, 8050 Zürich (CH)
(72) Erfinder: HANKING, Heino, 32429 Minden (DE)
(74) Vertreter: Partner, Lothar
(86) Internationale Anmeldenummer: PCT/EP2007/009554
(87) Internationale Veröffentlichungsnummer: WO 2008/058647

(56) Entgegenhaltungen:
- EP-A- 0 514 104
- DE-A1- 10 243 065
- US-A- 5 560 006
- US-A1- 2004 181 294
- US-A1- 2005 246 044

## Beschreibung

Die Erfindung bezieht sich auf ein optimiertes Speicherungs- und Zugriffsverfahren für einen Historienserver, welcher vorzugsweise in einem Prozessleitsystem einer technischen Anlage oder eines technischen Prozesses integriert ist. Das erfindungsgemäße Verfahren ist speziell zugeschnitten auf die Anforderungen im automatisierungstechnischen Umfeld und führt zu wesentlich besseren Eigenschaften als mit den bisherigen Standardmitteln möglich war. Weiterhin betrifft die Erfindung ein System zur Ausführung des Verfahrens.

Zur Langzeitarchivierung von Prozesswerten, auch als Prozessmesswerte oder Prozessdaten bezeichnet, werden die Daten als Messreihen, auch als Messwerthistorien oder Prozesswerthistorien bezeichnet, in einem sogenannten Historienserver abgelegt bzw. gespeichert.

Der Historienserver ist eine spezielle Datenbank mit Echtzeitfunktionen zur Sammlung von Prozess- oder Messdaten, Meldungen und Berichten (Dateien), zur Langzeitspeicherung und zur Archivierung der gesammelten Daten, wobei die gesammelten Daten sowie abgeschlossene Berichte in festgelegten Zeitabständen auf der Festplatte eines Protokollservers gespeichert werden.

Die Archivierung der Daten im Historienserver ist dabei sehr speicherintensiv, da das Automatisierungssystem einer technischen Anlage oder eines technischen Prozesses eine große Datenmenge bereitstellt, also beim Lesen der Daten, sehr viele Daten bewegt werden müssen, auch wenn nur ein einziger Mittelwert, beispielsweise ein Jahresmittelwert einer Prozessgröße, über einen großen Zeitraum benötigt wird.

Typischerweise werden von den Historienservern ständig sogenannte Aggregat-Werte, auch als Schwell- oder Grenzwerte eines Prozesswertes bezeichnet, über sehr lange Zeiträume angefragt. Dafür muss der gesamte Rohdatenbestand der geforderten Signale gelesen und die entsprechenden Aggregate ermittelt werden. Ein weiterer Nachteil der gegenwärtig verwendeten Verfahren beruht auf dem Überschreiben von historischen Daten. Hier würden die zuvor erstellten Aggregat-Werte plötzlich unbrauchbar und würden erst in einem manuell zu initiierenden neuen Aggregat-Berechungslauf wieder zur Verfügung stehen.

Mit den gegenwärtig in der Automatisierungstechnik verwendeten Verfahren zur Speicherung von Prozesswerten, im folgenden auch als Signale bezeichnet, für eine Archivierung werden die nachfolgend aufgeführten Verfahren eingesetzt.

Das Verfahren, welches einen relationalen Ansatz mittels einer relationale Datenbank verwendet, arbeitet nach den beiden nachfolgend aufgeführten Varianten.

In der Variante 1 werden alle Signale "ereignisgetrieben" in einer Tabelle mit ihren Signal-Index, Zeitstempel, Wert und Status gespeichert, wobei entweder der Signal-Index und/oder der Zeitstempel als Primärindex verwendet wird. Dabei sind die Ereignisse, welche die Speicherung auslösen, die jeweiligen Messwertänderungen um ein gewisses signal-individuelles Toleranzband. Es entsteht ein nicht zeitäquidistantes Archiv aller Signale in einer Tabelle.

In der Variante 2 werden alle Signale in einem festen Zeitraster, beispielsweise alle 5 Sekunden in einer Tabelle gespeichert. Dabei bilden die Spalten die Signalwerte und die Statusinformationen.

In beiden Varianten zeigt sich in der Praxis folgender Nachteil: Werden sehr viele Signale, beispielsweise mehr als 1000 Signale, in einer solchen Tabelle gespeichert, so zeigt sich dass das Lesen einzelner Signalzeitreihen recht langsam erfolgt, da aufgrund der für relationale Datenbanken typische SQL-Zugriff erst *alle* Daten bzw. aller Indextabellen aller Signale lesen muss, um dann nach dem gewünschten Signalindex zu suchen und diesen zu extrahieren. Bei Variante 2 kommt vermindernd hinzu, dass hier nur alle Signale mit der gleichen Geschwindigkeit, beispielsweise 5 Sekunden, aufgezeichnet werden. Sich langsam ändernde Werte werden folglich mehrfach aufgezeichnet, sich schneller als 5 Sekunden ändernde Werte gehen gar verloren.

Bei der Verwendung des relationalen Ansatzes bietet sich aufgrund der Technologie der relationalen Datenbanken die Möglichkeit, die benötigten Werte zyklisch schon vorab zu ermitteln und ebenfalls zu speichern. Beispielsweise laufen sogenannte OLAP (Online-Analytical-Processing) Lösungen meist einmal pro Nacht und ermitteln sowie speichern die gewünschten Aggregate. Dieser Vorgang ist sehr zeitaufwendig und erfordert einen hohen Datendurchsatz, da alle unkomprimierten Daten, auch als Rohdaten bezeichnet, nochmals von Festplatte gelesen werden müssen. Weiterhin muss der OLAP-Lauf geplant und eingerichtet werden, was mit einem erheblichen Konfigurationsaufwand verbunden ist. Weiterhin sorgen Kompressions-Scripte in der Datenbank dafür, das beispielsweise jede Stunde von allen Signalen nochmals, beispielsweise einstündige, Aggregate gebildet und gespeichert werden.

Dadurch würde sich zwar die Anfragezeit nach einem Jahresmittelwert in einem Report theoretisch verkürzen. Jedoch muss auch diese Vorgehensweise geplant und konfiguriert werden.

Aufgrund des allgemeinen Ansatzes von relationalen Datenbanken erreichen die vorab beschriebenen Optimierungen jedoch sehr schnell ihre Grenzen und führen allein aufgrund der großen Anzahl der gespeicherten Signale dazu, dass die relationale Datenbank sehr schnell nur noch "mit sich selbst" beschäftigt ist, da zum ständigen Erzeugen der Aggregate die Historien immer wieder durchsuchen müssen, also beispielsweise der letzte Tag bzw. die letzte Stunde zu lesen sind und alle gelesenen Werte durchgerechnet werden müssen.

Ein weiterer Nachteil entsteht hier beim Überschreiben von historischen Daten. Beispielsweise werden bei Prognosesystemen die zyklisch ermittelten neue Prognosen, also historische Zeitreihen in der Zukunft, erstellt und dabei die alten Prognosen ständig überschrieben. Hier würden die zuvor erstellten Aggregat-Werte plötzlich wertlos, da sich ja nun andere Werte ergeben und wären erst im nächsten Lauf wieder brauchbar. Hinzu käme, dass beide relationalen Varianten nicht ohne weiteres Möglich wären. Das Datenmodel in der Datenbank müsste spezielle Erweitrungen für Zukunftswerte enthalten.

Ein weiteres Verfahren, welches hochleistungsfähige proprietäre, Datenstromorientierte Speicherverfahren in einem proprietären Datenbank-Format in einer Datenbank verwendet, ist nachfolgend anhand des von der Firma ABB eingesetzten PGIM- (Power Generation Information manager) Servers beschrieben. Dabei wird kein relationales Datenmodell bei der Speicherung verwendet. Vielmehr wird jedes Signal wie eine eigene Datenbank behandelt. Dieses Prinzip umgeht die Vorgehensweise des vorab beschriebenen relationalen Ansatzes, indem beim Schreiben kein festes Raster bezüglich der Datenrate vorgegeben werden muss, da die Signale unabhängig sind. Beim Lesen einer Zeitreihe eines Signals wird direkt die Teildatenbank des gesuchten Signals adressiert und muss nicht aufwendig aus einer Gesamtdatenbank gefiltert werden. Dieser Ansatz führt dazu, dass die Betreiber von technischen Anlagen dazu übergehen möglichst alle Daten aufzuzeichnen und so die gesamten anfallenden Daten als unkomprimierte Daten oder Rohdaten speichern.

Als Folge sind der benötigte Datenbestand und damit die benötigte Festplattenkapazität für die Archivierung der Prozessdaten in den letzten Jahren stark gestiegen. Der zu speichernde Datenbestand liegt gegenwärtig im Berech von 0,5 bis ca. 5 Terabyte, wobei die Tendenz, bezogen auf den zu speichernden Datenbestand, weiter steigend ist.

Grundsätzlich ist die vorab beschriebene Verwendung des relationalen Ansatzes mittels der relationale Datenbank bezüglich der möglichen Speicher- und Leserate um Faktoren weniger leistungsfähig als die Verwendung von hochleistungsfähigen proprietären, datenstrom-orientierten Speicherverfahren in einem proprietären Datenbank-Format.

Mit der Verwendung des hochleistungsfähigen proprietären, datenstrom-orientierten Speicherverfahrens in einem proprietären Datenbank-Format wird jedoch keine Aggregat-Optimierungen erreicht, da diese um Faktoren schneller sind und damit eine hinreichend schnelle Antwort bei langen Anfragen geben können sowie auch meist keine eignen Nachberechnungen zulassen, da sie nur auf einer Rohdatenspeicherung ausgelegt sind.

Bei beiden vorab beschriebenen Verfahren gemäß dem relationalen Ansatz nach und dem proprietären Ansatz tritt weiterhin folgendes Problem auf. Typischerweise werden vom Historienserver, beispielsweise zur Erstellung eines Reports, ständig Aggregat-Werte über sehr lange Zeiträume angefragt. Dafür muss der gesamte Rohdatenbestand der geforderten Signale gelesen und die entsprechenden Aggregate bestimmt werden. Beispielsweise sei angenommen, dass ein Signal ca. jede Sekunde, bei einer Auflösung von einer Sekunde, einen neuen Wert liefert und den Zeitstempel, den Wert und den Status in 18 Bytes speichert, so ist für ein Jahr ein Speicherplatz von 356 * 24 * 3600 * 18= 528 Mbyte erforderlich. Um also einen einzigen Jahresmittelwert zu bekommen, muss im vorab beschriebenen Beispiel ein Datenbestand von 528 Mbyte gelesen und verarbeitet werden.

In der US 5 560 006 A ist ein Datenverarbeitungssystem zur Speicherung und Verarbeitung von Prozessdaten eines technischen Prozesses beschrieben, dass beispielsweise zum Überwachen eines laufenden betrieblichen Vorgangs genutzt wird, wobei aus dem laufenden betrieblichen Vorgang Datenelemente gesammelt werden, die ausgewählte Parameter des laufenden Vorgangs wiedergeben.

Der Erfindung liegt demgemäß die Aufgabe zugrunde, ein Verfahren zur optimierten Speicherung und Verarbeitung von Prozesswerten, auch als Prozessmesswerte oder Prozessdaten bezeichnet, eines technischen Prozesses oder einer technischen Anlage in einem Historienserver sowie ein entsprechendes System zur Ausführung des Verfahrens anzugeben, wodurch vorgenannte Nachteile des Standes der Technik überwunden werden. Mit dem erfindungsgemäßen Verfahren zur optimierten Speicherung und Verarbeitung von Prozesswerten in einem Historienserver soll insbesondere das die Geschwindigkeit beim Lesen von Aggregatwerten erhöht wird.

Diese Aufgabe wird erfindungsgemäß durch ein Verfahren mit den in Anspruch 1 angegebenen Merkmalen gelöst. Vorteilhafte Ausgestaltungen und Verbesserungen des erfindungsgemäßen Verfahrens sowie ein System zur Ausführung des Verfahrens sind in weiteren Ansprüchen und in der Beschreibung angegeben.

Die Erfindung betrifft ein Speicherungs- und Zugriffsverfahren, welches darauf beruht, dass ein sich automatisch selbst pflegender Aggregat-Speicher, der pro Signal die Aggregat-Bestimmungen online erstellt und pflegt, ohne dafür nochmals extra die historische Datenbestände zu lesen. Gleichzeitig werden die erstellten Aggregat-Werte automatisch für Client-Anfragen genutzt, ohne dass die ClientAnwendung gezielt die Aggregatwerte adressieren muss.

Nachfolgend wird beschrieben, wann, wo und wie die Aggregate gebildet werden. Dazu ist jedem Signal ein eigener RAM-Cache, auch als individueller Signal-Cache bezeichnet, für seine aus dem Prozess bereitgestellten entsprechenden Rohwerte zugewiesen. Während die Daten eintreffen, werden diese in den individuellen Signal-Caches gespeichert.

Weiterhin weist jedes Signal zusätzlich interne signal-individuelle Aggregat-Akkumulatoren für die gewünschten Aggregate auf, beispielsweise jeweils einen Minimalwert, einen Maximalwert und einen Integral-Wert. Die Aggregat-Akkumulatoren werden beim Eintreffen eines neuen Wertes, der einen Zeitstempel, einen Wert und einen Status aufweist, schon inkrementell für das definierte Intervall entsprechend verändert. Dazu wird ein neuer Wert, der kleiner ist als der aktuelle individuelle Aggregat-Akkumulator-Minimalwert, im folgenden auch Min-Akku-Wert genannt, ist, als neuer Min-Akku-Wert übernommen.

Äquivalent ist die Vorgehensweise für einen Aggregat-Akkumulator-Maximalwert, auch Max-Akku-Wert genannt und für einen Aggregat-Akkumulator-Integral, auch Integral- Akku, genannt, wobei für einen Integral- Akku die hinzugekommene Fläche aufaddiert wird. Überschreitet nun der Zeitstempel eines neuen Wertes eine vorgegebene Intervallgrenze, beispielsweise von einer Stunde, so können jetzt ohne eine weitere Leseoperation von historischen Daten sofort alle Aggregate aus den Akkumulatoren gebildet und im signal-individuellen Aggregatspeicher (4), vorzugsweise auf einer Festplatte, gespeichert werden. Gleichzeitig werden die Akkumulatoren für das nächste Intervall initialisiert.

Der signal-individuelle Aggregatspeicher auf Festplatte ist mit einer individuellen Lebenszeit konfiguriert und hat so die Aggregat-Daten als sogenannte Ringspeicher organisiert. Dazu wird automatisch für das entsprechende Signal immer die konfigurierte Aggregathistorie mitgepflegt.

Die Speicherausführung als Ring bewirkt in vorteilhafter Weise, dass keine Daten auf Festplatte verschoben werden müssen, da lediglich die Zeiger auf den Anfang und das Ende verändert werden und somit ein direktes Überschreiben an einer festgelegten Position erfolgt.

Falls historische Daten überschrieben werden müssen, beispielsweise Prognosewerte oder Korrekturen in ermittelten Historien, werden sofort für den zu überschreibenden Zeitbereich ebenfalls die Aggregate erneut mit ermittelt und die Korrektur sofort im Aggregatspeicher abgespeichert. Da die zur Ermittlung notwendigen Rohdaten sowieso im Speicher vorliegen, läuft dieser Vorgang ebenfalls sehr schnell ab.

Die Aggregat-Speicher sind kaskadenartig aufgebaut. Dadurch besteht die Möglichkeit beispielsweise Fünf- Minuten-Aggregate in Ein- Stunden Aggregate umzuwandeln. Dazu läuft im nächst höheren Aggregat-Speicher, beispielsweise einem Stunden-Aggregat), wieder nach dem vorab beschriebenen Prinzip für die Rohdaten, die Aggregat-Ermittlung ab, wobei jeder Aggregat-Cache wieder einen RAM-Cache und einen Aggregat-Akkumulator, diesmal für die höhere Stufe, hat.

In einer Ausgestaltung der Erfindung überwacht ein nebenläufiger Prozess im Historienserver zyklisch, beispielsweise täglich, die erforderlichen Aggregate dahingehend, dass sehr langsame Signale, typischerweise Signale, die sich im Mittel langsamer als alle 20 Sekunden ändern, nicht im Aggregat-Speicher abgelegt werden, da deren Speicherung im Aggregatspeicher auf Grund der geringen anfallenden Datenmenge nicht sinnvoll ist. Dabei wird automatisch entschieden welche Signale im Aggregat-Speicher abgelegt werden und welche Signale keine Aggregat-Speicher mehr benötigen.

Das erfindungsgemäße Verfahren ist somit in vorteilhafter Weise dafür vorgesehen eine enorme Leistungssteigerung beim Lesen von Aggregatwerten zu ermöglichen, ohne dabei das Gesamtverhalten des Historienservers an anderer Stelle zu ändern, also gegenüber den Verfahren gemäß dem Stand der Technik die Abfragen den Server punktuell nicht so stark belasten, dass eine echtzeitgemäße Reaktion möglich ist.

Weitere Vorteile der Erfindung beruhen darauf, dass die Aggregat-Werte sofort nach der Überschreitung des vorgegebenen Zeitintervalls verfügbar sind. Es ist nicht erforderlich auf einen weiteren Datenbanklauf, wie beispielsweise bei den relationalen Ansätzen mit OLAP typischerweise in der Nacht, zu warten. Alle Aggregat-Daten sind somit konsistent.

Da zur Ermittlung der Aggregate keine Historien mehr zu lesen sind, ergibt sich eine enorme Leistungssteigerung gegenüber bisherigen Lösungen, sowohl bezüglich der möglichen Speicherrate von Rohwerten als auch der Leserate von Aggregat-Werten.

Weiterhin wird in vorteilhafter Weise ein Einbruch der Leistungsfähigkeit der Datenbank durch einen extra Aggregat-Ermittlungslauf vermieden, da dieser Lauf hier komplett entfällt. Somit steht immer die volle Rechner-Leistung für die Client-Anfragen zur Verfügung.

Da jedes Signal einen individuellen Aggregat-Cache aufweist, lässt sich während durchzuführender Umkonfigurationsarbeiten an der Datenbank problemlos das für Historienserver notwendige Echtzeitverhalten garantieren. Im Gegensatz zu den bekannten Standard-SQL-Datenbanken finden keine nicht-deterministischen, verdeckten und Datenbank-internen Umstrukturierungen statt, wodurch jede Aktion zeitlich vorhersagbar wird.

Die Aggregat-Werte sind nahtlos in einem Abfrage-Modul, auch Abfrage-Engine genannt, integriert und vereinfachen damit die Anfragen von Client-Anwendungen. Aus Sicht eines Clients existiert nur das Rohsignal. Alle Aggregate sind aus der Sicht des Clients dynamisch und je nach Situation abfragbar.

Enthält beispielsweise ein Aggregat-Speicher 5-Minuten Aggregate und fragt ein Client nach 15 Minuten Aggregate ab, dann werden die 15-Minuten Aggregate automatisch aus den 5 Minuten Aggregaten gebildet, und nicht wie bisher üblich aus den Einzelwerten, die innerhalb der 15-Minuten aufgezeichnet wurden. Somit gibt es aus Sicht das Clients nur das Rohsignal, alle Aggregate sind aus der Sicht des Clients dynamisch und je nach Situation abfragbar.

Dadurch, dass jedes Signal durch den aktuellen verfügbaren Wert eine eigene Zeitführung aufweist, ist es in vorteilhafter Weise möglich zusätzlich neben den normalen in Echtzeit einlaufenden Historien, also Signale, die in der Regel die aktuelle Zeit als aktuellsten Messwert haben, auch Prognosewerte bereitzuhalten, die als aktuellsten Wert einen Zukunftswert enthalten , ohne dass dazu eine, wie bei SQL- oder OLAP-Methoden übliche aufwendige Konfiguration oder gar ein spezielleres Datenbank-Design erforderlich ist.

Das System zur Ausführung des erfindungsgemäßen Verfahrens ist dem Anspruch 5 zu entnehmen.

Das erfindungsgemäße System zur optimierten Speicherung und Verarbeitung von Prozesswerten eines technischen Prozesses oder einer technischen Anlage in einem Historienserver, welcher vorzugsweise in einem Prozessleitsystem einer technischen Anlage oder eines technischen Prozesses integriert ist, umfasst für die Rohdaten eines Prozesswertes jeweils einen eigenen individuellen Signal-Cache, dem die aus dem Prozess bereitgestellten entsprechenden Rohwerte zugewiesen werden. Während die Daten eintreffen, werden diese in den individuellen Signal-Caches gespeichert.

Wenn die entsprechenden Rohwerte im Historienserver eintreffen, werden diese in den individuellen Signal-Caches gespeichert. Weiterhin sind jedem Rohwert zusätzlich interne signal-individuelle Aggregat-Akkumulatoren für die gewünschten Aggregate zuordenbar. Die Aggregat-Akkumulatoren sind beim Eintreffen eines neuen Wertes inkrementell für das definierte Intervall entsprechend veränderbar.

Den Rohwerten ist jeweils ein Zeitstempel, einen Wert und einen Status zuordenbar. Bei einer Überschreitung einer vorgegebenen Intervallgrenze des Zeitstempels des neuen Wertes sind ohne eine weitere Leseoperation von historischen Daten sofort alle Aggregate aus den Akkumulatoren bildbar, im signal-individuellen Aggregatspeicher, vorzugsweise auf einer Festplatte, speicherbar und gleichzeitig die Akkumulatoren für das nächste Intervall initialisierbar.

In einer vorteilhaften Ausgestaltung der Erfindung sind der signal-individuellen Aggregatspeicher auf Festplatte mit einer individuellen Lebenszeit konfigurierbar und somit die Aggregat-Daten als Ringspeicher organisierbar.

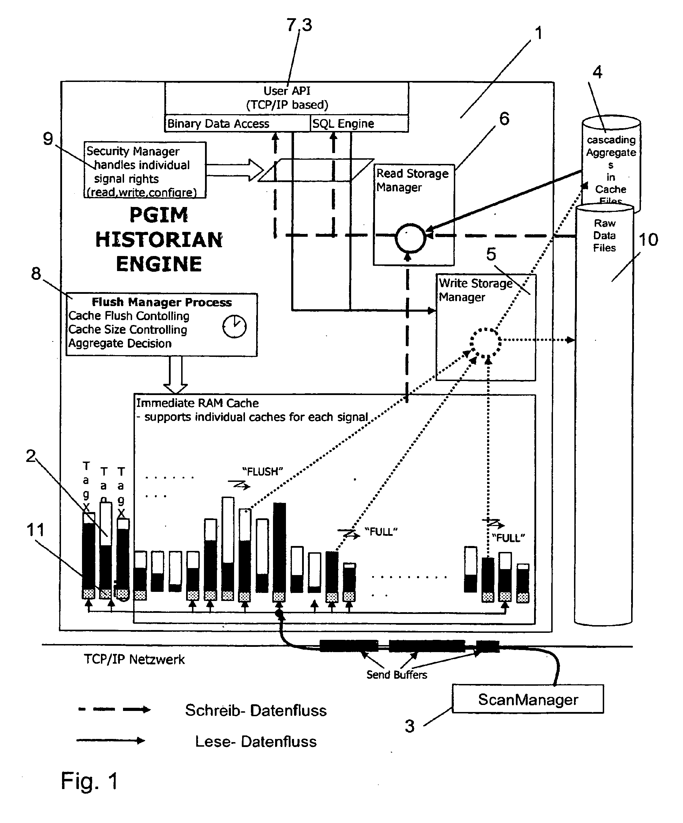

Anhand des in der **Fig. 1** Ausführungsbeispieles sollen die Erfindung sowie vorteilhafte Ausgestaltungen und Verbesserungen der Erfindung näher erläutert und beschrieben werden.

In **Fig. 1** ist eine Ausführungsform des erfindungsgemäßen Systems zur optimierten Speicherung und Verarbeitung von Prozesswerten eines technischen Prozesses oder einer technischen Anlage in einem Historienserver 1 gezeigt, welches in einem Prozessleitsystem integriert ist, und welches den Datenfluss und den Ablauf der Aggregatbildung zeigt.

Das erfindungsgemäße System umfasst für jedes Signal einen eigenen individuellen Signal-Cache 2, dem die aus dem Prozess bereitgestellten entsprechenden Rohwerte zugewiesen werden. Dazu werden die Rohwerte, nachfolgend auch als Werte oder Daten bezeichnet, die über einen Scan-Manager 3 eintreffen in den individuellen Signal-Caches 2 gespeichert. Den Rohwerten ist dabei jeweils ein Zeitstempel, einen Wert und einen Status zuordenbar.

Der Scan-Manager 3 ist demzufolge dafür vorgesehen, die vom Prozessleitsystem bereitgestellten Daten als Datenpakete zu sammeln und diese den im Historienserver 1 befindlichen Signal-Caches 2 zeitnah zuzuführen.

Jedes Signal weist zusätzlich interne signal-individuelle Aggregat-Akkumulatoren 11 für die gewünschten Aggregate auf. Beim Eintreffen eines neuen Wertes im Signal-Cache 2 wird der Aggregat-Akkumulator 11 entsprechend verändert.

Beim zeitlichen Überschreiten eines Aggregat-Intervalls sendet der Aggregat-Akkumulator 11 die akkumulierten Werte zu einem Write-Storage-Manager 5, der diese dann in einem Aggregatspeicher 4 ablegt.

Eine historische Datenanfrage bezüglich der Rohwerte und/oder der Aggregate durch eine Clientanwendung erfolgt über ein sogenanntes User API (Application Programming Interface) 7.3, welches die Anfrage an einen ReadStorageManager 6 weiterleitet. Dieser entscheidet, ob die Daten aus den Signal Caches 2 direkt oder aus den Rohdatendateien 10 oder vereinfacht aus den im Aggregatspeicher 4 befindlichen Aggregat-Dateien ermittelt werden.

Ein Überschreiben der Historie eines Signals durch eine Clientanwendung, beispielsweise mit Prognosereihen, erfolgt ebenfalls über das User API 7.3, welches die Anfrage an den WriteStorageManager 5 weiterleitet. Dieser führt das direkte Überschreiben in den Rohdatendateien 10 aus, ermittelt sofort ohne weitere Leseaktion im RAM die betroffenen neuen Aggregatwerte 11 und überschreibt diese ebenfalls in den Aggregatspeicher 4. Somit sind Rohdaten und die dazu passenden Aggregate in vorteilhafter Weise immer synchron.

Weiterhin weist das erfindungsgemäße System einen Flush-Mänager 8 auf, der mittels eines sogenannten Cache-Flush-Prozesses eine "Festplatten-freundliche" Entleerung der jeweiligen Caches steuert.

Dazu bewirkt der Cache-Flush-Prozess das komplette Schreiben des Cache-Inhaltes zum WriteManager 5, der wiederum den Inhalt des Signal-Caches in eine Rohdatendateien 10 schreibt und die Aggregatwerte 11 in den Aggregatspeicher 4 schreibt. Danach steht der nun leere Signal-Cache 1 wieder zur Erfassung der nächsten Werte zur Verfügung.

Der Cache-Flush-Prozess steuert weiterhin eine individuelle dynamische Cache-Größe in Abhängigkeit von der Signalgeschwindigkeit. Beispielsweise werden den sogenannten schnellen Signalen viele Werte pro Zeiteinheit zugeordnet. Diesen Signalen werden größere Kurzzeitcaches zugeteilt. Langsame Signale hingegen geben dabei nach und nach ihren Cache-Speicher an schnelle Signale ab.

Der somit zeit- und füllgrad- gesteuerte Cache-Flush-Prozess arbeitet so, dass möglichst wenige Datenzugriffe notwendig sind, bzw. der Datenzugriff möglichst gleichmäßig verteilt erfolgt.

Der signal-individuelle Aggregatspeicher 4 ist als sogenannte Ringspeicher organisiert, wodurch in vorteilhafter Weise immer die konfigurierte Aggregathistorie für das entsprechende Signal automatisch mitgepflegt wird.

Ob ein Signal wirklich einen Aggregat-Cache bekommen soll, wird nebenläufig automatisch im Flush-Manager Prozess 8, beispielsweise einmal pro Nacht ermittelt und entschieden.

Im Historienserver 1 ist desweiteren ein Sicherheits-Manager 9 integriert, der dafür vorgesehen ist, verschiedene Nutzungsrechte, wie Lese-, Schreib- und/oder Konfigurationsrechte, für verschiedener Nutzer des Historienservers zu verwalten.

## Patentansprüche

1. Verfahren zur optimierten Speicherung und Verarbeitung von Prozesswerten eines technischen Prozesses oder einer technischen Anlage in einem Historienserver (1), welcher vorzugsweise in einem Prozessleitsystem einer technischen Anlage oder eines technischen Prozesses integriert wird, wobei
- jedem Prozesswerte für seine aus dem Prozess bereitgestellten Rohwerte ein eigener Signal-Cache (2) zugeordnet wird,
- die aus dem Prozess bereitgestellten Rohwerte in den jeweiligen Signal-Caches (2) gespeichert werden, **dadurch gekennzeichnet, dass**
- jedem Rohwert zusätzlich interne signal-individuelle Aggregat-Akkumulatoren (11) für die gewünschten Aggregate zugeordnet werden, und
- die Aggregat-Akkumulatoren (11) beim Eintreffen eines neuen Rohwertes inkrementell für ein definiertes Intervall entsprechend verändert werden.

2. Verfahren nach Anspruch 1, **dadurch gekennzeichnet, dass** den Rohwerten ein Zeitstempel, ein Wert und ein Status zugeordnet wird.

3. Verfahren nach einem der vorherigen Ansprüche, **dadurch gekennzeichnet, dass** bei einer Überschreitung einer vorgegebenen Intervallgrenze des Zeitstempels des neuen Wertes ohne eine weitere Leseoperation von historischen Daten sofort alle Aggregate aus den Akkumulatoren gebildet werden, im signal-individuellen Aggregatspeicher (4), vorzugsweise auf einer Festplatte, gespeichert werden und gleichzeitig die Akkumulatoren für das nächste Intervall initialisiert werden.

4. Verfahren nach Anspruch 3, **dadurch gekennzeichnet, dass** der signal-individuelle Aggregatspeicher (4) auf der Festplatte mit einer individuellen Lebenszeit konfiguriert wird und so die Aggregat-Daten als Ringspeicher organisiert werden.

5. System zur optimierten Speicherung und Verarbeitung von Prozesswerten eines technischen Prozesses oder einer technischen Anlage in einem Historienserver (1), welcher vorzugsweise in einem Prozessleitsystem einer technischen Anlage oder eines technischen Prozesses integriert ist, wobei
- jedem Prozesswerte für seine aus dem Prozess bereitgestellten Rohwerte ein eigener individueller Signal-Cache (2) zuordenbar ist,
- die bereitgestellten Rohwerte in den individuellen Signal-Caches, (2) speicherbar sind, **dadurch gekennzeichnet, dass**
- jedem Rohwert zusätzlich interne signal-individuelle Aggregat-Akkumulatoren (11) für die gewünschten Aggregate zuordenbar sind, und
- die Aggregat-Akkumulatoren (11) beim Eintreffen eines neuen Rohwertes inkrementell für ein definiertes Intervall entsprechend veränderbar sind.

6. System nach Anspruch 5, **dadurch gekennzeichnet, dass** den Rohwerten ein Zeitstempel, ein Wert und ein Status zuordenbar ist.

7. System nach einem der Ansprüche 5 bis 6, **dadurch gekennzeichnet, dass** bei einer Überschreitung einer vorgegebenen Intervallgrenze des Zeitstempels des neuen Wertes ohne eine weitere Leseoperation von historischen Daten sofort alle Aggregate aus den Akkumulatoren bildbar sind, im signal-individuellen Aggregatspeicher (4), vorzugsweise auf einer Festplatte, speicherbar sind und gleichzeitig die Akkumulatoren für das nächste Intervall initialisierbar sind.

8. System nach einem der Anspruch 7, **dadurch gekennzeichnet, dass** der signal-individuelle Aggregatspeicher (4) auf der Festplatte mit einer individuellen Lebenszeit konfigurierbar ist und so die Aggregat-Daten als Ringspeicher organisierbar sind.

## Claims

1. A method for the optimum storing and processing of process values of a technical process or of a technical installation in a history server (1), preferably integrated in a process and control system of a technical installation or of a technical process, wherein
- a respective signal cache (2) is assigned to each process value, for its unprocessed values obtained from the process,
- the unprocessed values obtained from the process are stored in the respective signal caches (2),
**characterised in that**
- internal single-signal aggregate accumulators (11) for the desired aggregates are additionally assigned to each unprocessed value, and
- when a new unprocessed value is introduced, the aggregate accumulators (11) are incrementally modified in a corresponding manner for a defined interval.

2. The method according to claim 1, **characterised in that** a timestamp, a value and a status are assigned to the unprocessed values.

3. The method according to any one of the preceding claims, **characterised in that** when a predetermined interval limit of the timestamp of the new value is exceeded without an additional historical data reading operation, all the aggregates from the accumulators are immediately calculated, stored in the single-signal aggregate memory (4), preferably in a hard drive, and at the same time the accumulators are initialised for the following interval.

4. The method according to claim 3, **characterised in that** the single-signal aggregate memory (4) in the hard drive is configured with an individual lifetime and therefore the aggregate data is organised as a ring memory.

5. A system for the optimised storing and processing of process values of a technical process or of a technical installation in a history server (1), which is preferably integrated in a process and control system of a technical installation or of a technical process, wherein
- an respective single-signal cache (2) can be assigned to each process value, for its unprocessed values obtained from the process,
- the unprocessed values obtained can be stored in the individual signal caches (2),
**characterised in that**
- internal single-signal aggregate accumulators (11) for the desired aggregates can be additionally assigned to each unprocessed value, and
- when a new unprocessed value is introduced, the aggregate accumulators (11) can be incrementally modified in a corresponding manner for a defined interval.

6. The system according to claim 5, **characterised in that** a timestamp, a value and a status can be assigned to the unprocessed values.

7. The system according to any one of claims 5 to 6, **characterised in that** when a predetermined interval limit of the timestamp of the new value is exceeded without an additional historical data reading operation, all the aggregates of the accumulators can be immediately calculated, stored in the single-signal aggregate memory (4), preferably in a hard drive, and at the same time the accumulators can be initialised for the following interval.

8. The system according to claim 7, **characterised in that** the single-signal aggregate memory (4) in the hard drive can be configured with an individual lifetime and therefore the aggregate data can be organised as a ring memory.

## Revendications

1. Procédé pour le stockage et le traitement optimisés de valeurs de traitement d'un traitement technique ou d'une installation technique dans un serveur (1) d'historique, étant intégré de préférence dans un système de contrôle de traitement d'une installation technique ou d'un traitement technique, dans lequel
- à chaque valeur de traitement, pour leurs valeurs sans traiter obtenus à partir du traitement, on lui attribue une mémoire cache (2) de signal propre,
- les valeurs sans traiter obtenues à partir du traitement sont stockées dans les mémoires caches (2) de signal respectives,
**caractérisé en ce qu'**
- à chaque valeur sans traiter sont attribués additionnellement des accumulateurs (11) d'agrégats de signal individuel internes pour les agrégats voulus, et
- lors de l'introduction d'une nouvelle valeur sans traiter, les accumulateurs (11) d'agrégats sont modifiés de manière incrémentale, de manière correspondante, pour un intervalle défini.

2. Procédé selon la revendication 1, **caractérisé en ce que** l'on attribue aux valeurs sans traiter une estampille temporelle, une valeur et un état.

3. Procédé selon l'une des revendications précédentes, **caractérisé en ce qu'**en dépassant une limite d'intervalle prédéterminée de l'estampille temporelle de la nouvelle valeur sans une opération de lecture additionnelle de données historiques, on calcule immédiatement tous les agrégats des accumulateurs, on les stocke dans la mémoire (4) d'agrégats de signal individuel, de préférence dans un disque dur, et en même temps on initialise les accumulateurs pour le suivante intervalle.

4. Procédé selon la revendication 3, **caractérisé en ce que** la mémoire (4) d'agrégats de signal individuel dans le disque dur est configurée avec un temps de durée individuelle et donc les données d'agrégats sont organisées comme une mémoire annulaire.

5. Système pour le stockage et le traitement optimisés de valeurs de traitement d'un traitement technique ou une installation technique dans un serveur (1) d'historique, qui est intégré de préférence dans un système de contrôle de traitements d'une installation technique ou d'un traitement technique, dans lequel
- à chaque valeur de traitement, pour ses valeurs sans traiter obtenues à partir du traitement, on peut leur attribuer une mémoire cache (2) de signal individuel propre,
- les valeurs sans traiter obtenus peuvent être stockées dans les mémoires caches (2) de signal individuelles,
**caractérisé en ce qu'**à
- à chaque valeur sans traiter on peut lui attribuer additionnellement des accumulateurs (11) d'agrégats de signal individuel internes pour les agrégats voulus, et
- lors de l'introduction d'une nouvelle valeur sans traiter, on peut modifier les accumulateurs (11) d'agrégats de manière incrémentale, de manière correspondante, pour un intervalle défini.

6. Système selon la revendication 5, **caractérisé en ce que** l'on peut attribuer aux valeurs sans traiter une estampille temporelle, une valeur et un état.

7. Système selon l'une des revendications 5 à 6, **caractérisé en ce qu'**en dépassant une limite d'intervalle prédéterminée de l'estampille temporelle de la nouvelle valeur sans une opération de lecture additionnelle de données historiques, on peut calculer immédiatement tous les agrégats des accumulateurs, les stocker dans la mémoire (4) d'agrégats de signal individuel, de préférence dans un disque dur, et en même temps initialiser les accumulateurs pour l'intervalle suivant.

8. Système selon la revendication 7, **caractérisé en ce que** la mémoire (4) d'agrégats de signal individuel dans le disque dur peut être configurée avec un temps de durée individuelle et donc toutes les données d'agrégats peuvent être organisées comme mémoire annulaire.
